# EUROPÄISCHE PATENTSCHRIFT

(11) **EP 3 904 463 B1**
(45) Veröffentlichungstag und Bekanntmachung des Hinweises auf die Patenterteilung: **23.09.2026**
(21) Anmeldenummer: 20172323.6
(22) Anmeldetag: 30.04.2020
(51) Int. Cl.: C09D 5/00, C09D 5/06, C09D 7/00

(54) **ZUSAMMENSETZUNG ZUR MATTIERUNG UND REDUZIERUNG VON ANTI-FINGERPRINT-EFFEKTEN VON OBERFLÄCHEN AUF TRÄGERMATERIALIEN**
COMPOSITION FOR MATTING AND REDUCING ANTI-FINGERPRINT EFFECTS OF SURFACES ON SUPPORT MATERIALS
COMPOSITION PERMETTANT DE MATAGE ET DE RÉDUCTION DES EFFETS ANTI-EMPREINTES DES SURFACES SUR DES MATIÈRES PORTEUSES

(43) Veröffentlichungstag der Anmeldung: 03.11.2021
(73) Patentinhaber: Flooring Technologies Ltd., Kalkara SCM1001 (MT)
(72) Erfinder: Gier, Andreas, 66399 Mandelbachtal (DE); Kalwa, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 474 577
- WO-A1-2009/072738
- DE-A1- 102005 052 939
- DE-A1- 102011 084 183
- JP-A- 2011 068 000
- KR-B1- 101 384 424
- US-A1- 2016 032 146

## Beschreibung

Die vorliegende Erfindung betrifft eine Zusammensetzung zur Mattierung und Reduzierung von Anti-Fingerprint-Effekten von Oberflächen auf Trägermaterialien, ein Verfahren zu dessen Herstellung, die Verwendung dieser Zusammensetzung sowie Trägermaterialien, wie Papierlagen oder Holzwerkstoffplatten, mit dieser Zusammensetzung.

### Beschreibung

Bei vielen Produkten, die im täglichen Leben als Gebrauchsgegenstände usw. genutzt werden, ist neben der farblichen Gestaltung auch die Oberflächengestaltung ein wichtiger Aspekt. Teilweise ergänzen sich die beiden Aspekte, teilweise sind sie bewusst gegensätzlich gestaltet.

Dabei spielt natürlich neben der reinen visuellen Gestaltung auch die Frage eine Rolle, welche Eigenschaften eine Oberfläche für den Gebrauchsnutzen liefert. Dies gilt besonders bei Inneneinrichtungsgegenständen wie Möbel, deren Oberflächen stark durch Anfassen, Reinigen usw. beansprucht werden.

Ein sehr prägnantes Beispiel hierfür sind Hochglanzfronten in Küchen. Bei diesen Fronten ist besonders dann, wenn sie angefasst werden, häufig eine Abzeichnung der Fingerabdrücke feststellbar. Dies gilt besonders dann, wenn es sich um Melamin- oder Lackoberflächen handelt. Diese sind anscheinend besonders prädestiniert dafür, nach dem Anfassen Fingerabdrücke zu zeigen. Die Abzeichnung von Fingerabdrücken führt dazu, dass die Oberflächen häufig gereinigt werden müssen, was keinesfalls gewünscht ist.

Man muss allerdings bezüglich von Melaminoberflächen anmerken, dass sie eine sehr hohe mechanische und chemische Beständigkeit besitzen, die ihnen deutliche Vorteile gegenüber thermoplastischen Folien oder Lacken einräumen. Zudem kann durch die Ätzung der Pressbleche, die bei der Herstellung der melaminharzbeschichteten Holzwerkstoffplatten verwendet werden, nahezu jede beliebige Oberflächenausführung hergestellt werden.

Wie bereits angemerkt ist die Oberflächengestaltung ein wichtiger Aspekt bei Produkten. Diese ist wie bei fast allen Produkten Modetrends unterworfen. Stand vor einigen Jahren Hochglanz als Oberflächenausführungen bei vielen Produkten hoch im Kurs, ist man nun eher an matten Oberflächen interessiert. Auch bei diesen Oberflächen sind natürlich Fingerabdrücke nach dem Anfassen unerwünscht bzw. werden als Mangel betrachtet.

Die sich daraus ergebenen Nachteile sind somit optischer Natur verbunden mit einem erhöhten Reinigungsaufwand.

Der vorliegenden Erfindung lag daher die technische Aufgabe zu Grunde eine Oberfläche mit einem niedrigen Glanzgrad und gleichzeitigen Antifingerprint-Eigenschaften zu erzeugen. Dabei sollte auf die vorhandenen Materialsysteme zurückgegriffen werden können. Es sollen auch die vorhandenen Anlagen verwendet werden können. Die resultierenden Produkte sollten die gleichen Oberflächeneigenschaften besitzen wie Standardmelamin-Oberflächen.

Diese Aufgabe wird erfindungsgemäß durch eine Harzsuspension umfassend eine Zusammensetzung mit den Merkmalen des Anspruchs 1 gelöst.

Entsprechend wird eine Harzsuspension basierend auf einem Formaldehyd-Harz umfassend eine Zusammensetzung zur Mattierung und Reduzierung von Anti-Fingerprint-Effekten von Oberflächen auf Trägermaterialien bereitgestellt, wobei die Zusammensetzung herstellbar ist aus
- mindestens einer Verbindung der allgemeinen Formel (I)

   **SiX₄** **(I),**

   wobei
   - X H, OH oder ein hydrolysierbarer Rest ausgewählt aus der Gruppe umfassend Halogen, Alkoxy, Carboxy, Amino, Monoalkylamino oder Dialkylamino, Aryloxy, Acyloxy, Alkylcarbonyl ist;
- mindestens einer Verbindung der allgemeinen Formel (II)

   **R¹ₐSiX₍₄₋ₐ₎** (II),

   wobei
   - X die obige Bedeutung aufweist, und
   - R¹ ein organischer Rest ist ausgewählt aus der Gruppe umfassend Alkyl, Aryl, Cycloalkyl, und
   - wobei R¹ mindestens eine funktionelle Gruppe Q₁ aufweist, die ausgewählt ist aus einer Gruppe enthaltend eine Hydroxy-, Amino-, Monoalkylamino-, Carboxy-, Mercapto-, Alkoxy-, Aldehyd-, Acryl-, Acryloxy-, Methacryl-, Methacryloxy-, Cyano-, Isocyano- und Epoxid- Gruppe, und
   - a = 1, 2, 3, insbesondere 1 oder 2 ist, und
- mindestens einer Verbindung der allgemeinen Formel (III)

   **R²_{b}SiX_{(4-b)}** **(III),**

   wobei
   - X die obige Bedeutung aufweist,
   - R² ein nicht-hydroliserbarer organischer Rest R² ist ausgewählt aus der Gruppe umfassend nicht-substitituiertes Alkyl, Aryl, Alkenyl, Alkinyl, Cycloalkyl, Cycloalkenyl oder perfluoriertes Alkyl. und
   - b = 1, 2, 3, oder 4 ist, und
- mindestens einem Mattierungsmittel umfassend Polymere und Kieselsäure.

Die Zusammensetzung in der vorliegenden Harzsuspension umfasst mit den Verbindungen der allgemeinen Formel (I) und (II) eine vernetzende, hydrophile Komponente und mit der Verbindung der allgemeinen Formel (III) eine hydrophobe Komponente. Die Silanverbindung der Formel (I) dient dem Aufbau eines SiO₂ Netzwerkes über Kondensation der OH-Gruppen, Anbindung an Melaminharz und Mattierungsmittel. Die Silanverbindung der Formel (II) bindet über die funktionellen Gruppen an das Melaminharz und Mattierungsmittel. Die Silanverbindung der Formel (III) ermöglicht den Aufbau einer hydrophoben und oleophoben Oberfläche. In einem polaren Medium werden sich diese funktionalisierten Silan an die Grenzfläche Luft / Schicht ausrichten und damit eine erhöhte Konzentration an der Oberfläche zeigen.

Die vorliegende Zusammensetzung kann Beschichtungs- oder Imprägierharzen, wie z.B. Melaminharzen und/oder Harnstoffharzen, zugegeben werden. Im Falle von Imprägnierharzen kann die vorliegende Zusammensetzung nach der Kernimprägnierung von Papierlagen (Dekorpapier, Overlaypapier) mit den üblicherweise verwendeten Imprägnierharzen und einer Zwischentrocknung auf die Oberseite der kernimprägnierten Papierlage (Imprägnat) aufgebracht wird. Die vorliegende Zusammensetzung kann aber auch zusammen oder separat mit einem Harz auf eine bedruckte Holzwerkstoffplatte aufgebracht werden.

Die Verwendung der vorliegenden Zusammensetzung bietet verschiedene Vorteile. So kann eine matte Oberfläche mit Glanzpunkten von weniger als 10, bevorzugt von weniger als 8, insbesondere bevorzugt von weniger als 5 erzeugt werden. Die behandelte Oberfläche weist Antifingerprint-Eigenschaften und erfordert einen nur geringen Reinigungsaufwand in Vergleich zu den herkömmlichen Oberflächen.

Die Verwendung von Zusammensetzungen enthaltend Silane zur Oberflächenbeschichtung ist bekannt. DE 10 2005 052939 A1 beschreibt ein Verfahren zur Beschichtung von Substraten (wie zum Beispiel Stein, Vliese, Folie, Gewebe, metallisches Substrat) mit einer Zusammensetzung aus verschiedenen Silanen. DE 10 2011 084183 A1 beschreibt eine wässrige Korrosionsschutz-beschichtung auf Basis von Silanen. Diese Zusammensetzungen werden als Beschichtungen, insbesondere zum Schutz von Metallen vor Korrosion verwendet. US 2016/0032146 A1 beschreibt einen organischen transparenten Film mit Antifingerprint Eigenschaften, der durch Hydrolyse und Kondensation von Alkyltrimethoxy-Silanen oder Alkyltriethoxy-Silanen mit Tetramethoxysilan oder Tetraethoxysilanen gebildet wird. Solch ein Film kann auf verschiedenen Substratoberflächen ausgebildet werden, wie zum Beispiel Metallen, Polymeren, Keramik, Glas, Harz, Holz, Papier. KR 101384424 B1 beschreibt die Herstellung einer Zusammensetzung mit Antifingerprint-Eigenschaften, wobei verschiedene Silane miteinander vermischt werden und dieser Mischung Hohlpartikel zugegeben werden. JP 2011 068000 betrifft einen Antifingerprint-Film enthaltend poröse Siliziumspartikel, Tetraalkoxy-Silane und ein hydrolysierbares Silan mit einer Phenylgruppe. EP 2474577 A1 beschreibt eine silanhaltige Beschichtungszusammensetzung für Displays oder Touchscreens zur Vermeidung von Fingerabdrücken. WO 2009/072738 A1 betrifft ein Antifingerprint-Beschichtungsmaterial für Stahloberflächen. Das Beschichtungsmaterial enthält Polysilikate, ein Epoxidharz, ein Vinyl Harz, kolloidales Silicium, ein hydrophiles Material und eine hydrophobes Material. Somit werden die in dem Stand der Technik beschriebenen Zusammensetzungen (fast) nur für metallische Oberflächen oder Glasoberflächen beschrieben. Ein Hinweis auf die Zugabe der Zusammensetzungen zu Formaldehydharz-Suspensionen, die zur Beschichtung von Papierlagen oder Holzwerkstoffplatten geeignet sind, ist dem Stand der Technik jedoch nicht zu entnehmen.

Der hydrolysierbare Rest X ist vorteilhafterweise ausgewählt aus einer Gruppe enthaltend H, OH, Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugt ist der Rest X H, OH oder Alkoxy, insbesondere Methoxy, Ethoxy, n-Propoxy oder i-Propoxy.

In einer besonders bevorzugten Variante der vorliegenden Zusammensetzung entspricht die Verbindung der allgemeinen Formel (I) der Formel SiX₄, wobei der Rest X OH oder Alkoxy, insbesondere Methoxy, Ethoxy, n-Propoxy oder i-Propoxy, ist. Besonders bevorzugt sind die Verbindungen Tetramethoxysilan und Tetraethoxysilan.

Der organische Rest R¹ der Verbindung der allgemeinen Formel (II) ist bevorzugt ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl. In einer Ausführungsform ist der organische R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Butadienyl oder Cyclohexadienyl, bevorzugt Methyl, Ethyl, Propyl oder Vinyl.

In einer Ausführungsform der vorliegenden Zusammensetzung ist die mindestens eine funktionelle Gruppe Q¹ der Verbindung der allgemeinen Formel (II) ausgewählt aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe. Die funktionelle Gruppe Q¹ kann demnach vorteilhafterweise einen Rest mit einer Doppelbindung oder einer Epoxid-Gruppe auf, der mittels UV-Strahlung aktivierbar und polymerisierbar ist.

In einer Variante der vorliegenden Zusammensetzung können Verbindungen der allgemeinen Formel (II) gemäß R¹ₐSiX₍₄₋ₐ₎, insbesondere R¹SiX₃, mit einer funktionellen Gruppe Q1 ausgewählt sein aus Methacryloxypropyltrimethoxysilan (MPTS), Aminoethylaminopropyltrimethoxysilan, Silane mit einer Epoxyfunktionalisierung wie Glycidyloxypropyltriethoxysilan, oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C≡C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer weiteren Ausführungsform der vorliegenden Zusammensetzung ist der nichthydrolisierbare organische Rest R² der Verbindung gemäß der Formel (III) ausgewählt aus einer Gruppe umfassend C₁-C₁₅-Alkyl, insbesondere C₁-C₁₀-Alkyl, C₂-C₆-Alkenyl, C₂-C₆-Alkinyl und C₆-C₁₀-Aryl. Diese können nicht-substituiert oder mit einer weiteren hydrophoben Gruppe substituiert sein.

Es ist bevorzugt, wenn der nicht-hydroliserbare organische Rest R² der Verbindung der allgemeinen Formel (III) ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Vinyl, 1-Propenyl, 2-Propenyl, Butenyl, Acetylenyl, Propargyl, Phenyl und Naphthyl. Besonders bevorzugt sind Methyl, Ethyl, Propyl, Pentyl, Octyl, oder Phenyl-Reste.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

Die Verbindung der allgemeinen Formel (III) kann insbesondere eine der folgenden Formeln umfassen:
- R²SiX₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X als Alkoxy, insbesondere Methoxy, Ethoxy, n-Propoxy oder i-Propoxy, wie z.B. Octyltriethoxysilan, Phenyltriethoxysilan,
- R²SiX₃ mit R² als perfluorierte C1-C10 Alkyl-Gruppe, bevorzugt perfluoriertes Methyl, Ethyl, Propyl, Pentyl, Hexyl, Heptyl, Octyl, insbesondere Tridecafluorooctyl, Perfluoroctyl, Perfluorpentyl, Pefluorhexyl.

In einer Variante weist die vorliegende Zusammensetzung werden mindestens eine Verbindung der allgemeinen Formel (I), mindestens eine Verbindung der allgemeinen Formel (II) und mindestens zwei Verbindungen der allgemeinen Formel (III) auf. Es können aber auch mindestens eine Verbindung der allgemeinen Formel (I) und mindestens zwei, bevorzugt mindestens drei Verbindungen der allgemeinen Formel (II) und mindestens zwei, bevorzugt mindestens drei Verbindungen der allgemeinen Formel (III) enthalten sein. Jegliche Kombination ist hier vorstellbar.

So kann in einer Variante die Zusammensetzung Tetraethoxysilan als Verbindung der Formel (I), Glycidyloxypropyltriethoxysilan als Verbindung der Formel (II) und Octyltriethoxysilan und Pentyltriethoxysilan als Verbindungen der Formel (III) enthalten. In einer anderen Variante kann die Zusammensetzung Tetraethoxysilan als Verbindung der Formel (I), Glycidyloxypropyltriethoxysilan als Verbindung der Formel (II) und Octyltriethoxysilan und Tridecafluoroctyltriethoxysilan als Verbindungen der Formel (III) enthalten.

In einer weiteren Ausführungsform sind die Verbindung der allgemeinen Formel (I) in einer molaren Menge zwischen 20 und 60 die Verbindung der allgemeinen Formel (II) in einer molaren Menge zwischen 20 - 60 und die Verbindungen der allgemeinen Formel (III) in einer molaren Menge zwischen 0,1 -50 in der Zusammensetzung enthalten.

Dabei kann sich der für die Verbindung der allgemeinen Verbindung (III) angegebene Bereich der molaren Menge sich auf eine Verbindung oder auf die Summe von zwei Verbindungen oder drei Verbindungen der allgemeinen Formel (III) beziehen.

Das Verhältnis des Silanverbindung der Formel (I) zu den Silanverbindungen der Formel (II) und (III) liegt bevorzugt zwischen 40 / 20 / 40.

Erfindungsgemäß umfasst das mindestens eine Mattierungsmittel Polymere und Kieselsäure. Ein mögliches Mattierungsmittel ist z.B. unter dem Namen Deuteron MM 659 bekannt, welches ein Komposit aus Polyurethan, z.B. Polyurethankugeln und Kieselsäure ist. Wichtig ist, dass das Mattierungsmittel in der Partikelverteilung eine passende Größe zum Schichtauftrag zeigt. Auch möglich wären andere Werkstoffe wie reine Kieselsäure Partikel wir zum Bsp. Syloid 244, eine synthetische, amorphe Kieselsäure, oder auch Tospeals (monodisperse Polysiloxanpartikel). Das Mattierungsmittel sollte die Viskosität nicht zu stark steigern. Alle hier genannten Partikel zeigen eine hohe Lichtstabilität.

In einer weiteren Ausführungsform kann die vorliegende Zusammensetzung anorganische Partikel, insbesondere SiO₂, Al₂O₃, ZrO₂, TiO₂-Partikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden. Ein synthetisch, amorphes SiO2 ist z.B. unter dem Handelsnamen SYLOID 244 bekannt.

Die vorliegende Zusammensetzung wird bevorzugt in wässriger Form verwendet. Es ist aber auch möglich, dass die vorliegende Zusammensetzung ausschließlich Alkohol und wenig oder kein Wasser enthält, d.h. die Silanverbindungen können in einer alkoholischen Form verwendet werden.

Die vorliegend verwendete Zusammensetzung zur Verwendung in der vorliegenden Harzsuspension kann in einem Verfahren umfassend die folgenden Schritte hergestellt werden:
- Bereitstellen von einer wässrigen Suspension enthaltend mindestens eine Verbindung der allgemeinen Formel (I), mindestens eine Verbindung der allgemeinen Formel (II) und mindestens eine Verbindung der allgemeinen Formel (III);
- Zugabe von mindestens einem Katalysator, insbesondere einer Säure, zu der Suspension aus mindestens einer Verbindung der Formel (I), mindestens einer Verbindung der Formel (II) und mindestens einer Verbindung der Formel (III);
- Zugabe von mindestens einem Mattierungsmittel; und
- Abtrennung der wässrigen Phase des Gemisches aus mindestens einer Verbindung der Formel (I), mindestens einer Verbindung der Formel (II), mindestens einer Verbindung der Formel (III) und dem mindestens einem Mattierungsmittel.

Als Katalysator geeignete anorganische und/oder organische Säuren sind ausgewählt aus einer Gruppe enthaltend Phosphorsäure, Essigsäure, p-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

In einer bevorzugten Ausführungsform umfasst das Verfahren die folgenden Schritte:
- Bereitstellen von einer alkoholisch wässrigen Suspension, insbesondere einer ethanolisch wässrigen Suspension, enthaltend mindestens eine Verbindung der allgemeinen Formel (I), mindestens eine Verbindung der allgemeinen Formel (II) und mindestens einer, bevorzugt zwei Verbindungen der allgemeinen Formel (III);
- Zugabe von mindestens einem Katalysator, insbesondere einer Säure, zu der Suspension aus mindestens einer Verbindung der Formel (I), mindestens einer Verbindung der Formel (II) und mindestens einer, bevorzugt zwei Verbindungen der Formel (III) und Erwärmen der Mischung;
- Zugabe von einer wässrigen Mischung umfassend mindestens ein Mattierungsmittel, anorganische Partikel, mindestens einen Alkohol oder mindestens einen Ether,
- Abtrennung der wässrigen Phase des Gemisches aus mindestens einer Verbindung der Formel (I), mindestens einer Verbindung der Formel (II), mindestens einer Verbindung der Formel (III) und dem mindestens einem Mattierungsmittel vom Alkohol (z.B. durch Verdampfen).

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% in verwendet.

Als Alkohol, der mit dem Mattierungsmittel der wässrigen Mischung zugegeben wird, kann z.B. Phenoxyethanol verwendet werden. Phenoxyethanol hat als Alkohol einen hohen Flammpunkt von 126 °C, was wichtig für die Prozesssicherheit auch hinsichtlich eines zu schnellen Eintrocknens ist. Andere Alkohole sind technisch ebenfalls möglich. Anstatt des Alkohols kann in diesem Verfahrensschritt auch ein Ether wie z.B. Dipropylenglykolmonomethylether verwendet werden.

Auch hat sich die Zugabe von einem Hilfsmittel zur Abtrennung und Entfernung des Alkohols, insbesondere des Ethanols, aus der wässrigen Phase erwiesen. Hierbei hat sich Acetat, wie z.B. n-Butylacetat als sehr positiv hinsichtlich Produktionszeit und anschließender Stabilität im wässrigen Medium gezeigt. Anstelle des n-Butylacetates könnte auch 1-Methoxy-2-propanol verwendet werden.

Die so hergestellte wässrige Suspension der Zusammensetzung kann in wässrige Harze aller Art, z.B. Formaldehydharze wie Melaminharze, eingerührt werden und zur Erzeugung einer matten und gleichzeitig hydrophoben und oleophoben Oberfläche verwendet werden.

In einer weitergehenden Ausführungsform kann der wässrigen Suspension mindestens ein silkonhaltiges Additiv als Verlaufsmittel, wie z.B. BYK-306, zugegeben werden. Dieses Additiv reduziert die Oberflächenspannung und dient als guter Vermittler zwischen der vorliegenden Zusammensetzung mit den Silanverbindungen und einem wässrigen Harz bzw. Wasser dient.

Soll die Zusammensetzung in nicht-wässrigen Harze auf alkoholischer Basis, wie z.B. Acrylat- , Epoxid- oder Urethanharze, eingebracht werden, wird die Rezeptur abgeändert (nicht erfindungsgemäß). So werden die Silane im ersten Verfahrensschritt in einer Suspension mit einem reduzierten Wasseranteil (z.B. 10 g Wasser und 80 g 1-Methoxy-2-Propanol) bereitgestellt (andere Alkohole sind auch möglich).

Die Zusammensetzung in einer Harzsuspension kann zur Beschichtung von Trägermaterialien, insbesondere von Papierlagen, wie Dekorpapierlagen oder Overlaypapierlagen, oder insbesondere von Holzwerkstoffplatten, wie mitteldichten Faser (MDF)-, hochdichten Faser (HDF)- oder Grobspan (OSB)-Platten, Sperrholzplatten oder eine Kunststoff-Komposit-Platten (WPC) oder Stein-Kunststoff-Komposit-Platten (SPC) verwendet werden.

Der Auftrag der Harzsuspension auf eine Holzwerkstoffplatte erfolgt typischerweise mittels Walzen, und der Auftrag der Harzsuspension auf eine Papierlage mittels eines Rasterwerks,

Entsprechend werden Holzwerkstoffplatte beschichtet mit der vorliegenden Zusammensetzung und Papierlagen, bevorzugt Dekorpapierlage oder Overlaypapierlage, beschichtet mit der vorliegenden Zusammensetzung bereitgestellt, die einen reduzierten Glanzgrad aufweisen. Die Oberflächen der mit der vorliegenden Zusammensetzung beschichteten Holzwerkstoffplatten und Papierlagen weisen Glanzgrade von weniger als 10, bevorzugt von weniger als 8, insbesondere bevorzugt von weniger als 5. Es können sogar Glanzgrade von weniger als 4, z.B. 3,1, 3,4 oder 3,8 erreicht werden.

Wie bereits erwähnt, kann die vorliegende Zusammensetzung auf eine Papierlage aufgetragen werden, wobei bereits imprägnierte Papierlagen (Imprägnate) besonders bevorzugt sind. Vorliegend ist unter dem Begriff der "Imprägnierung" eine vollständige oder teilweise Durchtränkung der Papierlage mit dem Harz zu verstehen. Derartige Imprägnierungen können z.B. in einem Imprägnierbad, durch Walzen, durch Rasterwalzen, durch Aufrakeln oder auch durch Besprühen aufgebracht werden.

Als Papierlagen kommen z.B. Overlaypapiere, Dekorpapiere, oder Kraftpapiere zum Einsatz. Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen. Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 60 Gew% imprägniert. Nach dem Durchlauf einer Atemstrecke erfolgt eine Tauchimpägnierung mit einem Harz. In einem Rakelsystem / Quetschwalzenpaar wird überschüssiges Harz entfernt, und optional werden abriebfeste Partikel auf die imprägnierte Papierlage gestreut. Nach einen Trocknungsschritt wird dann die Harzsuspension mit einem Feststoffgehalt zwischen 50 und 70 Gew%, bevorzugt 55 Gew% umfassend die erfindungsgemäße mattierende Zusammensetzung aufgetragen. Es erfolgt ein weiterer Trocknungsschritt auf eine Restfeuchte von ca. 6%. Das Imprägnat kann dann in üblicher Weise mit einer Holzwerkstoffplatte z.B. in einer Kurztaktpresse verpresst werden.

In einer anderen bevorzugten Ausführungsform wird die Zusammensetzung auf eine bedruckte Holzwerkstoffplatte aufgetragen.

Hierzu wird eine Holzwerkstoffplatte bzw. Trägerplatte zunächst mit einer Harzgrundierung versehen, auf welcher mindestens eine Grundierungsschicht aufgetragen wird. Die dabei bevorzugt verwendete Grundierungsschicht umfasst eine Zusammensetzung aus Kasein oder Sojaprotein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein oder Sojaprotein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

In einer weiteren Ausführungsvariante wird auf die Grundierung eine Primerschicht, bevorzugt als Einmalauftrag mit anschließender Trocknung, aufgebracht. Die Primerschicht ist insbesondere im Falle eines anschließenden Tiefdruckverfahrens (mit Walzen) sinnvoll, wohingegen diese bei Anwendung eines Digitaldruckverfahrens nicht zwingend erforderlich ist.

Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Als Direktdruckverfahren zum Bedrucken der Holzwerkstoffplatte werden vorteilhafterweise Tiefdruck- und Digitaldruckverfahren angewendet.

Auf die Dekorschicht werden Abdeckschichten mit oder ohne Zusätze aufgetragen, die in Menge und Zusammensetzung variieren können.

So können in einer Variante folgende Aufträge erfolgen:
- Auftragen von mindestens einer ersten Harzschicht auf die mindestens eine Dekorschicht auf der Oberseite der Holzwerkstoffplatte, wobei die erste Harzschicht einen Feststoffgehalt zwischen 60 und 80 Gew%, bevorzugt 65 Gew% aufweist und Glaskugeln als Abstandshalter enthält;
- Trocknen des Aufbaus aus erster Harzschicht und Glaskugeln in mindestens einer Trocknungsvorrichtung;
- Auftragen von mindestens einer zweiten Harzschicht auf die Oberseite und optional auf die Unterseite der Holzwerkstoffpatte, wobei die zweite Harzschicht einen Feststoffgehalt zwischen 60 und 80 Gew%, bevorzugt 65 Gew% aufweist;
- gleichmäßiges Aufstreuen von abriebfesten Partikeln auf die zweite Harzschicht auf der Oberseite der Holzwerkstoffplatte;
- anschließendes Trocknen der zweiten Harzschicht mit den abriebfesten Partikeln in mindestens einer Trocknungsvorrichtung;
- Auftragen von mindestens einer dritten und einer vierten Harzschicht, wobei die dritte einen Feststoffgehalt zwischen 50 und 70 Gew%, bevorzugt 60 Gew% aufweist,
- anschließendes Trocknen der aufgetragenen dritten Harzschicht in mindestens einer weiteren Trocknungsvorrichtung;
- Auftragen von mindestens vierten Harzschicht, wobei die vierte Harzschicht einen Feststoffgehalt zwischen 50 und 70 Gew%, bevorzugt 60 Gew% aufweist;
- anschließendes Trocknen der aufgetragenen vierten Harzschicht in mindestens einer weiteren Trocknungsvorrichtung;
- Auftragen von mindestens einer Harzsuspension mit einem Feststoffgehalt zwischen 50 und 70 Gew%, bevorzugt 55 Gew% umfassend die erfindungsgemäße Zusammensetzung,
- anschließendes Trocknen der aufgetragenen Harzsuspension in mindestens einer weiteren Trocknungsvorrichtung; und
- Verpressen des Schichtaufbaus in einer Kurztaktpresse.

Wie oben ausgeführt, können Glaskugeln aufgebracht werden, die als Abstandshalter fungieren. Die bevorzugt verwendeten Glaskugeln weisen einen Durchmesser von 80-100 µm auf. Die Menge an Glaskugeln beträgt 10 bis 50 g/m², bevorzugt 10 bis 30 g/m², insbesondere bevorzugt 15 bis 25 g/m². Der Ansatz besteht bevorzugt aus ca. 40 kg Harz flüssig plus Glaskugeln und Hilfsstoffe. Die Glasperlen können ebenfalls in silanisierter Form vorliegen. Durch die Silanisierung der Glasperlen wird die Einbettung der Glasperlen in die Harzmatrix verbessert.

Wie oben ebenfalls bereits erwähnt, können auf die Holzwerkstoffplatte abriebfeste Partikel, wie z.B. Partikel aus Korund (Aluminiumoxide), Borcarbide, Siliziumdioxide, Siliziumcarbide, aufgestreut werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird.

Die Menge an aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F230 verwendet.

Die Trocknung der Harzschichten erfolgt bei Trockner-Temperaturen zwischen 150 und 220°C, bevorzugt zwischen 180 und 210°C, insbesondere in einem Konvektionstrockner. Die Temperatur wird an die jeweiligen Harzschichten angepasst und kann in den einzelnen Konvektionstrocknern variieren. Anstatt von Konvektionstrocknern können aber auch andere Trockner zum Einsatz kommen.

In dem sich an den letzten Trocknungsschritt anschließenden Pressschritt erfolgt ein Verpressen des Schichtaufbaus unter Druck- und Temperatureinfluss in einer Kurztaktpresse bei Temperaturen zwischen 150 und 250°C, bevorzugt bei 160°C und einem Druck zwischen 30 und 60 kg/cm². Die Presszeit liegt zwischen 10 bis 20 sec, bevorzugt zwischen 12 bis 14 sec.

Bevorzugt wird die beschichtete Holzwerkstoffplatte in der Kurztaktpresse zu einem in der Kurztaktpresse befindlichen strukturierten Pressblech anhand von Markierungen auf der Holzwerkstoffplatte ausgerichtet, so dass eine Deckungsgleichheit zwischen dem Dekor auf der Holzwerkstoffplatte und der einzuprägenden Struktur des Pressbleches hergestellt wird. Dies ermöglicht die Herstellung einer dekorsynchronen Struktur. Während des Verpressens kommt es zu einer Aufschmelzung der Melaminharzschichten und Ausbildung eines Laminats durch Kondensationsreaktion.

Die Erfindung wird nachfolgend unter Bezugnahme an Ausführungsbeispielen näher erläutert.

### Ausführungsbeispiel 1:

### a) Herstellung einer ersten mattierenden Zusammensetzung

In einem Rührgefäß werden 50 g Ethanol und 90 g Wasser vorgelegt. Hierzu wird nun eine Silanmischung aus 27,6 g Octyltriethoxysilan 23,4 g Pentyltriethoxysilan / 55,6 g Glycidyloxypropyltriethoxysilan und 81,2 g Tetraethoxysilan gegeben und kräftig gerührt. Nun wird noch eine Mischung aus 10 g Wasser und 5,2 g para Toloulsulfonosäure hinzugegeben und auf 40 °C erhitzt und 60 Minuten gerührt.

Nach dieser Zeit werden weitere 50 g Wasser sowie 10 g N-Butylacetat, 5 g 2-Phenoxyethanol, sowie 65 g Mattierungsmittel (Deuteron 659) 35 g (Syloid 244) hinzugegeben und weitere 120 Minuten bei 40 °C gerührt. Im Anschluss wird der Ethylalkohol mit Hilfe eines Rotationsverdampfers entfernt.

Zu 380 g Lösung wird nun noch 19 g des Verlaufsmittels Byk 306 hinzugegeben.

### b) Herstellung einer zweiten mattierenden Zusammensetzung

In einem Rührgefäß werden 50 g Ethanol und 90 g Wasser vorgelegt. Hierzu wird nun eine Silanmischung aus 27,6 g Octyltriethoxysilan 51,1 g Tridecafluoroctyl- triethoxysilan / 55,6 g Glycidyloxypropyltriethoxysilan und 81,2 g Tetraethoxysilan gegeben und kräftig gerührt. Nun wird noch eine Mischung aus 10 g Wasser und 5,2 g para Toloulsulfonosäure hinzugegeben und auf 40 °C erhitzt und 60 Minuten gerührt.

Nach dieser Zeit werden weitere 50 g Wasser sowie 10 g n-Butylacetat, 5 g 2-Phenoxyethanol, sowie 65 g Mattierungsmittel (Deuteron 659) 35 g (Syloid 244) hinzugegeben und weitere 120 Minuten bei 40 °C gerührt. Im Anschluss wird der Ethylalkohol mit Hilfe eines Rotationsverdampfers entfernt.

Zu 380 g Lösung wird nun noch 19 g des Verlaufsmittels Byk 306 hinzugegeben.

Zum Einarbeiten in Acrylat-, Epoxid- oder Urethanharze auf ylkoholischer Basis bzw. 100 % Systeme wird die obige Rezeptur abgeändert. Die Wassermenge in den Beispielen wird ersetzt durch 10 Wasser und 80 g 1-Methoxy-2-Propanol). Wobei auch andere Alkohole möglich sind. Die Zugabe der zweiten Menge Wasser (10 g) bleibt erhalten. Eventuell kann nun der Rotationsverdampfungsschritt zum Entfernen des Ethanols entfallen. Jedoch könnten man hier noch einen höher siedenden Alkohol wie Dipropylengylkolmonomethylether hinzugeben und die niedrigsiedenden Alkohole entfernen, so dass man den Flammpunkt weiter nach oben bringt.

### Ausführungsbeispiel 2: Aufbringen der erfindungsgemäßen Zusammensetzung auf ein Dekorpapier

In einem Imprägnierkanal wird von einem Abwickler ein Dekorpapier ( Grammatur: 80 g/m² ) abgerollt. Das Dekorpapier wird zunächst in einer Tränkwanne rückseitig mit einem Melaminharz imprägniert. Das Melaminharz hat einen Feststoffgehalt von ca. 60 Gew% und enthält die üblichen Hilfsstoffe wie Härter, Netzmittel. Trennmittel usw. Nach dem Durchlaufen der Atemstrecke erfolgt eine Tauchimprägnierung ebenfalls mit einem Melaminharz. Das Dekorpapier durchläuft Quetschwalzen in denen der Harzauftrag auf ca. 125 g flüssig/m² eingestellt wird. Das Dekorpapier durchläuft einen ersten Schwebetrockner in dem das Dekorpapier auf eine Restfeuchte von 15 - 20 % getrocknet wird.

In einem Rasterwerk wird die Oberseite des Dekorpapiers mit einer Rezeptur aus 100 Gew% Melaminharz (Feststoffgehalt: 55 Gew%) und 95 Gew% der erfindungsgemäßen Zusammensetzung (Inosil MM-32-x) versehen. Die Auftragsmenge lag dabei bei 50 g Rezeptur/ m².

Es wird wiederum in einem Schwebetrockner getrocknet. Die Restfeuchte lag dann bei 6,0 %.

Das Imprägnat wird auf Format geschnitten und abgestapelt. Das Imprägnat wurde anschließend in einer Kurztaktpresse auf eine Spanplatte aufgepresst (Press-parameter: p= 40 kg/cm², T= 200°C oben/200°C unten, t=14 sec). Es wurde ein Pressblech mit einer Büttenstruktur verwendet.

Nach der Verpressung wurde eine Glanzgradbestimmung (DIN EN ISO 2813:2015-02, Messwinkel: 85°) durchgeführt, wobei sich ein Wert von 3,8 Glanzpunkten ergab. Ein Imprägnat, das ohne die Rezeptur mit der erfindungsgemäßen Zusammensetzung imprägniert worden war, lieferte einen Wert von 12,3 Glanzpunkten bei der Glanzgradbestimmung. Die Oberfläche hatte auch ausgeprägte Antifingerprint-Eigenschaften.

### Ausführungsbeispiel 3: Aufbringen der erfindungsgemäßen Zusammensetzung auf ein Overlaypapier

In einem Imprägnierkanal wird von einem Abwickler ein Overlaypapier (Grammatur: 30 g/m²) abgerollt. Das Overlaypapier wird zunächst in einer Tränkwanne rückseitig mit einem Melaminharz imprägniert. Das Melaminharz hat einen Feststoffgehalt von ca. 60 Gew% und enthält die üblichen Hilfsstoffe wie Härter, Netzmittel. Trennmittel usw. Nach dem Durchlaufen der Atemstrecke erfolgt eine Tauchimprägnierung ebenfalls mit einem Melaminharz. Das Overlaypapier durchläuft Quetschwalzen in denen der Harzauftrag auf ca. 180 g flüssig/m² eingestellt wird. Das Overlaypapier wird dann mit Hilfe einem Streuer auf der Oberseite mit ca. 20 g Korund/m² bestreut (Korngröße: F230 nach FEPA-Standard). Dann durchläuft das Imprägnat einen ersten Schwebetrockner in dem das Overlayimprägnat auf eine Restfeuchte von 15 - 20 % getrocknet wird.

In einem Rasterwerk wird die Rückseite des Overlaypapiers mit einer Rezeptur aus 100 Gew% Melaminharz (Feststoffgehalt: 55 Gew%) und 95 Gew% der erfindungsgemäßen Zusammensetzung (Inosil MM-32-x). Die Auftragsmenge lag dabei bei 50 g Rezeptur/ m². Es wird wiederum in einem Schwebetrockner getrocknet. Die Restfeuchte lag dann bei 6,0 %.

Das Imprägnat wird auf Format geschnitten und abgestapelt. Anschließend wird die Palette mit den Imprägnaten gedreht (Unterseite nach oben). Das Imprägnat wurde anschließend in einer Kurztaktpresse verpresst. Dabei kam folgender Aufbau zum Einsatz: Overlayimprägnat - Dekorimprägnat -HDF (Faserplatte mit erhöhter Rohdichte) - Gegenzugimprägnat.

Bei den Imprägnaten handelt es sich - bis auf das Overlayimprägnat - um Standardprodukte, die für diese Anwendung bei Lohnimprägnierern beschafft werden können.

Es wurde mit den folgenden Pressparametern gearbeitet: p= 40 kg/cm², T= 200°C oben/200°C unten, t=14 sec.). Es wurde ein Pressblech mit einer Büttenstruktur verwendet.

Nach der Verpressung wurde eine Glanzgradbestimmung (DIN EN ISO 2813:2015-02, Messwinkel: 85°) durchgeführt, wobei sich ein Wert von 3,1 Glanzpunkten ergab. Ein Aufbau, der ein Overlayimprägnat ohne die erfindungsgemäße Zusammensetzung imprägniert worden war, lieferte einen Wert von 11,9 Glanzpunkten bei der Glanzgradbestimmung. Die Oberfläche hatte auch ausgeprägte Antifingerprint-Eigenschaften.

### Ausführungsbeispiel 4: Aufbringen der erfindungsgemäßen Zusammensetzung auf eine Holzwerkstoffplatte

Eine HDF (Format: 2800 x 2070 x 7 mm) wird in einer Direktdrucklinie zunächst mit einem Melaminharz grundiert (Auftragsmenge: ca. 20 g Melaminharz fl./m², Feststoffgehalt: ca. 65 Gew.%). Das Harz wird in einem Umlufttrockner getrocknet und anschließend eine Farbgrundierung aufgetragen, die aus Titandioxid und Kasein besteht. Diese Farbgrundierung wird bis zu sieben Mal aufgetragen. Dabei liegt die Auftragsmenge bei 5 - 10 g Grundierung fl./Auftragswerk. Es wird jeweils nach jedem Auftrag eine Zwischentrocknung mit Hilfe von einem Umluft und/oder IR-Trockner durchgeführt. Danach wird ein Primer aufgetragen (Auftragsmenge 10 - 20 g fl/ m²). Dieser wird ebenfalls getrocknet. Auf diesen Primer wird dann im Tiefdruck- oder Digitaldruckverfahren ein Dekor aufgedruckt.

Anschließend wird eine Abdeckschicht aus Melaminharz aufgetragen (Auftragsmenge: 10 - 30 g Melaminharz fl./ m², Feststoffgehalt: 65 Gew%). Das Melaminharz enthält Glaskugeln (Durchmesser Glaskugeln: 80 - 100 µm, Auftragsmenge: 5 g Glaskugeln/m²) als Abstandshalter. Die Platten durchlaufen wiederum einen Trockner. Danach werden sie in einem Paternoster abgekühlt.

Die Platten werden dann an einer Produktionslinie auf der Oberseite mit Melaminharz (Auftragsmenge: 60 g Melaminharz fl./m², Feststoff: 65 Gew%.) beschichtet. Gleichzeitig wird auf der Rückseite ein Melaminharz als Gegenzug in der gleichen Menge ebenfalls mit Hilfe einer Walze aufgetragen. Dann erfolgt das Aufstreuen von Korund auf die Oberseite der Platte (Auftragsmenge: 20 g Korund/m², Korngröße: F230 nach FEPA-Standard). Der Aufbau wird in einem Trockner mit Hilfe von IR-Strahlern oder Umluft getrocknet. Anschließend werden noch zweimal 30 g Melaminharz fl./m² (Feststoffgehalt: 60 Gew%) mit Hilfe von Walzenauftragsaggregaten aufgetragen. Nach jedem Auftrag folgt eine Zwischentrocknung. In einem letzten Walzenauftragswerk werden mit einer Rezeptur aus 100 Gew% Melaminharz (Feststoffgehalt: 55 Gew%) und 95 Gew% der erfindungsgemäßen Zusammensetzung (Inosil MM-32-x) aufgebracht. Die Auftragsmenge lag dabei bei 50 g Rezeptur/ m².

Die Platten werden in einem Umlufttrockner getrocknet. Die Platten werden dann in einer Legestation mit einem Gegenzugimprägnat gelegt und dann in eine Kurztaktpresse transferiert. Dort wird der Aufbau dann bei T=160°C, p=30 kg/cm² und t=14 sec verpresst. Es wurde ein Pressblech mit einer Büttenstruktur verwendet.

Nach der Verpressung wurde eine Glanzgradbestimmung (DIN EN ISO 2813:2015-02, Messwinkel: 85°) durchgeführt, wobei sich ein Wert von 3,4 Glanzpunkten ergab. Ein Aufbau, der ein Overlayimprägnat ohne die Rezeptur mit der erfindungsgemäßen Zusammensetzung imprägniert worden war, lieferte einen Wert von 12,3 Glanzpunkten bei der Glanzgradbestimmung. Die Oberfläche hatte auch ausgeprägte Antifingerprint-Eigenschaften.

### Ausführungsbeispiel 5:

Neben den Glanzgraden wurden für die Ausführungsbeispiele 1 und 2 auch weitere Eigenschaften der verpressten Holzwerkstoffplatten untersucht.

Diese sind in der folgenden Tabelle zusammengefasst.

| Bsp. | Papiere** | Säuretest*** | Gitterschnitt**** | Glanzgrad |
|---|---|---|---|---|
| behandeltes OV | OV;D;G | 2 | 2 | 3,1 |
| Unbehandeltes OV | OV;D;G | 2 | 1 | 11,9 |
| behandeltes D | D;G | 2 | 2 | 3,8 |
| Unbehandeltes D | D;G | 1 | 2 | 12,3 |

| | | | | |
|---|---|---|---|---|
| ** OV=Overlay;D=Dekorpapier;G=Gegenzug *** 1= keine Veränderung, Prüffläche ist nicht von umliegender Fläche zu unterscheiden; 2 = mäßige Veränderung, Prüffläche ist von umliegender Fläche bei Betrachtung aus unterschiedlichen Richtungen zu unterscheiden, zum Beispiel Entfernung, Glanz- und Farbveränderungen, es tritt keine fühlbare Veränderung der Oberfläche an 3 = starke Veränderung, Oberflächenstruktur deutlich verändert und/oder Entfärbung, Glanz-und Farbveränderungen und/oder vollständige oder teilweise Delaminierung des Oberflächenmaterials **** 1 = an den Schnittpunkten der Gitterlinien sind kleine Splitter der Beschichtung abgeplatzt, abgeplatzte Fläche nicht größer als 5 % der Gitterschnittfläche 2 = die Beschichtung ist längst der Schnittränder und/oder an den Schnittpunkten der Gitterlinien abgeplatzt, abgeplatzte Fläche größer als 5 %, aber nicht größer als 15 % der Gitterschnittfläche 3 = die Beschichtung ist längst der Schnittränder teilweise oder ganz breiten Streifen abgeplatzt und/oder einige Quadrate sind teilweise oder ganz abgeplatzt, abgeplatzte Fläche größer als 15 %, aber nicht größer als 35 % der Gitterschnittfläche | | | | |

## Patentansprüche

1. Harzsuspension basierend auf einem Formaldehyd-Harz umfassend eine Zusammensetzung zur Mattierung und Reduzierung von Anti-Fingerprint-Effekten von Oberflächen auf Trägermaterialien, wobei die Zusammensetzung herstellbar ist aus
- mindestens einer Verbindung der allgemeinen Formel (I)
**SiX₄** **(I),**
wobei
- X H, OH oder ein hydrolysierbarer Rest ausgewählt aus der Gruppe umfassend Halogen, Alkoxy, Carboxy, Amino, Monoalkylamino oder Dialkylamino, Aryloxy, Acyloxy, Alkylcarbonyl ist;
- mindestens einer Verbindung der allgemeinen Formel (II)
**R¹ₐSiX₍₄₋ₐ₎** **(II),**
wobei
- X die obige Bedeutung aufweist, und
- R¹ ein organischer Rest ist ausgewählt aus der Gruppe umfassend Alkyl, Aryl, Cycloalkyl, und
- wobei R¹ mindestens eine funktionelle Gruppe Q₁ aufweist, die ausgewählt ist aus einer Gruppe enthaltend eine Hydroxy-, Amino-, Monoalkylamino-, Carboxy-, Mercapto-, Alkoxy-, Aldehyd-, Acryl-, Acryloxy-, Methacryl-, Methacryloxy-, Cyano-, Isocyano- und Epoxid- Gruppe, und
- a = 1, 2, 3, insbesondere 1 oder 2 ist, und
- mindestens einer Verbindung der allgemeinen Formel (III)
**R²_{b}SiX_{(4-b)}** **(III),**
wobei
- X die obige Bedeutung aufweist,
- R² ein nicht-hydroliserbarer organischer Rest R² ist ausgewählt aus der Gruppe umfassend nicht-substitituiertes Alkyl, Aryl, Alkenyl, Alkinyl, Cycloalkyl, Cycloalkenyl oder perfluoriertes Alkyl, und
- b = 1, 2, 3, oder 4 ist, und
- mindestens ein Mattierungsmittel umfassend Polymere und Kieselsäure.

2. Harzsuspension nach Anspruch 1, **dadurch gekennzeichnet, dass** X ausgewählt ist aus einer Gruppe enthaltend H, OH, Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆.

3. Harzsuspension nach Anspruch 1 oder 2, **dadurch gekennzeichnet, dass** X H, OH oder Alkoxy, insbesondere Methoxy, Ethoxy, n-Propoxy oder i-Propoxy, ist.

4. Harzsuspension nach einem der vorhergehenden Ansprüche, **dadurch gekennzeichnet, dass** R¹ der Verbindung der allgemeinen Formel (II) ausgewählt ist ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl.

5. Harzsuspension nach einem der vorhergehenden Ansprüche, **dadurch gekennzeichnet, dass** die mindestens eine funktionelle Gruppe Q¹ der Verbindung der allgemeinen Formel (II) ausgewählt ist aus einer Gruppe enthaltend Epoxid-, Hydroxy- , Ether-, Acryl-, Acryloxy-, Methacryl-, Methacryloxy-, Amino-, Alkoxy-, Cyano- und/oder Isocyano-Gruppe.

6. Harzsuspension nach einem der vorhergehenden Ansprüche, **dadurch gekennzeichnet, dass** der nicht-hydroliserbare organische Rest R² der Verbindung der allgemeinen Formel (III) ausgewählt ist aus einer Gruppe umfassend C₁-C₁₅-Alkyl, insbesondere C₁-C₁₀-Alkyl, C₂-C₆-Alkenyl, C₂-C₆-Alkinyl und C₆-C₁₀-Aryl.

7. Harzsuspension nach einem der vorhergehenden Ansprüche, **dadurch gekennzeichnet, dass** nicht-hydroliserbare organische R² der Verbindung der allgemeinen Formel (III) ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Vinyl, 1-Propenyl, 2-Propenyl, Butenyl, Acetylenyl, Propargyl, Phenyl und Naphthyl.

8. Harzsuspension nach einem der vorhergehenden Ansprüche, **dadurch gekennzeichnet, dass** mindestens eine Verbindung der allgemeinen Formel (I), mindestens eine Verbindung der allgemeinen Formel (II) und mindestens zwei Verbindungen der allgemeinen Formel (III) enthalten sind.

9. Harzsuspension nach einem der vorhergehenden Ansprüche, **dadurch gekennzeichnet, dass** das mindestens eine Mattierungsmittel ein Komposit aus Polyurethan, synthetische, amorphe Kieselsäure oder monodisperse Polysiloxanpartikel umfasst.

10. Harzsuspension nach einem der vorhergehenden Ansprüche, **dadurch gekennzeichnet, dass** anorganische Partikel, insbesondere SiO₂, Al₂O₃, ZrO₂, TiO₂-Partikel, enthalten sein können.

11. Harzsuspension nach einem der vorhergehenden Ansprüche, **dadurch gekennzeichnet, dass** das Formaldehyd-Harz ein Melaminharz ist.

12. Verfahren zur Herstellung einer Zusammensetzung zur Verwendung in einer Harzsuspension nach einem der vorhergehenden Ansprüche umfassend die Schritte:
- Bereitstellen von einer wässrigen Suspension enthaltend mindestens eine Verbindung der allgemeinen Formel (I), mindestens eine Verbindung der allgemeinen Formel (II) und mindestens eine Verbindung der allgemeinen Formel (III);
- Zugabe von mindestens einem Katalysator, insbesondere einer Säure, zu der Suspension aus mindestens einer Verbindung der Formel (I), mindestens einer Verbindung der Formel (II) und mindestens einer Verbindung der Formel (III);
- Zugabe von mindestens einem Mattierungsmittel; und
- Abtrennung der wässrigen Phase des Gemisches aus mindestens einer Verbindung der Formel (I), mindestens einer Verbindung der Formel (II), mindestens einer Verbindung der Formel (III) und dem mindestens einem Mattierungsmittel.

13. Verwendung einer Harzsuspension nach einem der Ansprüche 1-11 zur Beschichtung von Trägermaterialien, insbesondere von Papierlagen, wie Dekorpapierlagen oder Overlaypapierlagen, oder insbesondere von Holzwerkstoffplatten, wie mitteldichten Faser (MDF)-, hochdichten Faser (HDF)- oder Grobspan (OSB)-Platten, Sperrholzplatten oder eine Kunststoff-Komposit-Platten (WPC) oder Stein-Kunststoff-Komposit-Platten (SPC).

14. Holzwerkstoffplatte beschichtet mit mindestens einer Harzsuspension nach einem der Ansprüche 1 bis 11.

15. Papierlage, bevorzugt Dekorpapierlage oder Overlaypapierlage, beschichtet mit mindestens einer Harzsuspension nach einem der Ansprüche 1 bis 11.

## Claims

1. A resin suspension based on a formaldehyde resin comprising a composition for matting and reducing anti-fingerprint effects on surfaces of substrate materials, wherein the composition is preparable from
- at least one compound of the general formula (I)
**SiX₄** (**I),**
wherein
- X is H, OH, or a hydrolyzable moiety selected from the group consisting of halogen, alkoxy, carboxy, amino, monoalkylamino or dialkylamino, aryloxy, acyloxy, or alkylcarbonyl;
- at least one compound of the general formula (II)
**R¹ₐ SiX₍₄₋ₐ₎** (**II),**
wherein
- X has the above meaning, and
- R¹ is an organic moiety selected from the group comprising alkyl, aryl, cycloalkyl, and
- wherein R¹ has at least one functional group Q₁ selected from a group comprising a hydroxy, amino, monoalkylamino, carboxy, mercapto, alkoxy, aldehyde, acryl, acryloxy, methacryl, methacryloxy, cyano, isocyano, and epoxide group, and
- a = 1, 2, 3, in particular 1 or 2, and
- at least one compound of the general formula (III)
**R²_{b} SiX_{(4-b)}** **(III),**
wherein
- X has the above meaning,
- R² is a non-hydrolyzable organic moiety R² selected from the group consisting of unsubstituted alkyl, aryl, alkenyl, alkynyl, cycloalkyl, cycloalkenyl, or perfluorinated alkyl, and
- b = 1, 2, 3, or 4, and
- at least one matting agent comprising polymers and silica.

2. Resin suspension according to claim 1, **characterized in that** X is selected from a group consisting of H, OH, fluorine, chlorine, bromine, iodine, C₁₋₆ -alkoxy, in particular methoxy, ethoxy, n-propoxy, and butoxy, C₆₋₁₀-aryloxy, in particular phenoxy, C₂₋₇ - acyloxy, in particular acetoxy or propionoxy, C₂₋₇ -alkylcarbonyl, in particular acetyl, monoalkylamino or dialkylamino having C₁ to C₁₂ , in particular C₁ to C₆ .

3. Resin suspension according to claim 1 or 2, **characterized in that** X is H, OH, or alkoxy, in particular methoxy, ethoxy, n-propoxy, or i-propoxy.

4. Resin suspension according to one of the preceding claims, **characterized in that** R¹of the compound of general formula (II) is selected from a group comprising C₁-C₃₀- alkyl, in particular C₅- C₂₅-alkyl, C₂-C₆-alkenyl, C₃-C₈-cycloalkyl, and C₃-C₈-cycloalkenyl.

5. Resin suspension according to one of the preceding claims, **characterized in that** the at least one functional group Q¹of the compound of general formula (II) is selected from a group containing epoxide, hydroxy, ether, acrylic, acryloxy, methacrylic, methacryloxy, amino, alkoxy, cyano, and/or isocyanate groups.

6. Resin suspension according to one of the preceding claims, **characterized in that** the non-hydrolyzable organic moiety R² of the compound of general formula (III) is selected from a group comprising C₁-C₁₅-alkyl, in particular C₁-C₁₀-alkyl, C₂-C₆-alkenyl, C₂-C₆-alkynyl, and C₆-C₁₀-aryl.

7. Resin suspension according to one of the preceding claims, **characterized in that** the non-hydrolyzable organic R² of the compound of general formula (III) is selected from the group comprising methyl, ethyl, n-propyl, isopropyl, n-butyl, s-butyl, t-butyl, pentyl, hexyl, heptyl, octyl, nonyl, cyclohexyl, vinyl, 1-propenyl, 2-propenyl, butenyl, acetylenyl, propargyl, phenyl, and naphthyl.

8. Resin suspension according to one of the preceding claims, **characterized in that** at least one compound of the general formula (I), at least one compound of the general formula (II), and at least two compounds of the general formula (III) are contained.

9. Resin suspension according to one of the preceding claims, **characterized in that** the at least one matting agent comprises a composite of polyurethane, synthetic amorphous silica, or monodisperse polysiloxane particles.

10. Resin suspension according to one of the preceding claims, **characterized in that** inorganic particles, in particular SiO₂ , Al₂O₃ , ZrO₂ , TiO₂ particles, may be included.

11. Resin suspension according to one of the preceding claims, **characterized in that** the formaldehyde resin is a melamine resin.

12. A method for preparing a composition for use in a resin suspension according to one of the preceding claims, comprising the steps of:
- providing an aqueous suspension containing at least one compound of the general formula (I), at least one compound of the general formula (II), and at least one compound of the general formula (III);
- adding at least one catalyst, in particular an acid, to the suspension comprising at least one compound of formula (I), at least one compound of formula (II), and at least one compound of formula (III);
- adding at least one matting agent; and
- separating the aqueous phase of the mixture comprising at least one compound of formula (I), at least one compound of formula (II), at least one compound of formula (III), and the at least one matting agent.

13. Use of a resin suspension according to one of claims 1-11 for coating substrate materials, in particular paper layers, such as decorative paper layers or overlay paper layers, or in particular wood-based boards, such as medium-density fiber (MDF) boards, high-density fiber (HDF) boards, or oriented strand boards (OSB), plywood boards, or wood-plastic composite (WPC) or stone-plastic composite (SPC) boards.

14. Wood-based board coated with at least one resin suspension according to one of claims 1 to 11.

15. Paper layer, preferably a decorative paper layer or an overlay paper layer, coated with at least one resin suspension according to one of claims 1 to 11.

## Revendications

1. Suspension de résine à base d'une résine de formaldéhyde comprenant une composition pour le matage et la réduction des effets anti-empreintes de surfaces sur des matériaux de support, dans laquelle la composition peut être fabriquée à partir de
- au moins un composé de formule générale (I)
**SiX₄** **(I),**
dans laquelle
- X est H, OH ou une fraction hydrolysable choisie dans le groupe comprenant halogène, alcoxy, carboxy, amino, monoalkylamino ou dialkylamino, aryloxy, acyloxy, alkylcarbonyle ;
- au moins un composé de formule générale (II)
**R¹ₐSiX₍₄₋ₐ₎** **(II),**
dans laquelle
- X a la signification ci-dessus, et
- R¹ est une fraction organique choisie dans le groupe comprenant alkyle, aryle, cycloalkyle, et
- dans laquelle R¹ présente au moins un groupe fonctionnel Q₁ qui est choisi dans un groupe contenant un groupe hydroxy, amino, monoalkylamino, carboxy, mercapto, alcoxy, aldéhyde, acrylique, acryloxy, méthacrylique, méthacryloxy, cyano, isocyano et époxy, et
- a = 1, 2, 3, en particulier est 1 ou 2, et
- au moins un composé de formule générale (III)
**R²_{b}SiX_{(4-b)}** **(III),**
dans laquelle
- X a la signification ci-dessus,
- R² est une fraction organique non hydrolysable R² choisie dans le groupe comprenant alkyle, aryle, alcényle, alcynyle, cycloalkyle, cycloalcényle ou alkyle perfluoré non substitué, et
- b = 1, 2, 3 ou est 4, et
- au moins un agent de matage comprenant des polymères et de la silice.

2. Suspension de résine selon la revendication 1, **caractérisée en ce que** X est choisi dans un groupe contenant H, OH, fluor, chlore, brome, iode, C₁₋₆-alcoxy, en particulier méthoxy, éthoxy, n-propoxy et butoxy, C₆₋₁₀-aryloxy, en particulier phénoxy, C₂₋₇-acyloxy, en particulier acétoxy ou propionoxy, C₂₋₇-alkylcarbonyle, en particulier acétyle, monoalkylamino ou dialkylamino avec C₁ à C₁₂, en particulier C₁ à C₆.

3. Suspension de résine selon la revendication 1 ou 2, **caractérisée en ce que** X est H, OH ou alcoxy, en particulier méthoxy, éthoxy, n-propoxy ou i-propoxy.

4. Suspension de résine selon l'une quelconque des revendications précédentes, **caractérisée en ce que** R¹ du composé de formule générale (II) est choisi dans un groupe comprenant C₁-C₃₀-alkyle, en particulier C₅-C₂₅-alkyle, C₂-C₆-alcényle, C₃-C₈-cycloalkyle et C₃-C₈-cycloalcényle.

5. Suspension de résine selon l'une quelconque des revendications précédentes, **caractérisée en ce que** l'au moins un groupe fonctionnel Q¹ du composé de formule générale (II) est choisi dans un groupe contenant un groupe époxy, hydroxy, éther, acrylique, acryloxy, méthacryle, méthacryloxy, amino, alcoxy, cyano et/ou isocyano.

6. Suspension de résine selon l'une quelconque des revendications précédentes, **caractérisée en ce que** la fraction organique non hydrolysable R² du composé de formule générale (III) est choisie dans un groupe comprenant C₁-C₁₅-alkyle, en particulier C₁-C₁₀-alkyle, C₂-C₆-alcényle, C₂-C₆-alcynyle et C₆-C₁₀-aryle.

7. Suspension de résine selon l'une quelconque des revendications précédentes, **caractérisée en ce que** R² organique non hydrolysable du composé de formule générale (III) est choisi dans le groupe contenant méthyle, éthyle, n-propyle, isopropyle, n-butyle, s-butyle, t-butyle, pentyle, hexyle, heptyle, octyle, nonyle, cyclohexyle, vinyle, 1-propényle, 2-propényle, butényle, acétylényle, propargyle, phényle et naphthyle.

8. Suspension de résine selon l'une quelconque des revendications précédentes, **caractérisée en ce qu'**au moins un composé de formule générale (I), au moins un composé de formule générale (II) et au moins deux composés de formule générale (II) sont contenus.

9. Suspension de résine selon l'une quelconque des revendications précédentes, **caractérisée en ce que** l'au moins un agent de matage comprend un composite de polyuréthane, de silice synthétique amorphe ou de particules de polysiloxane monodispersées.

10. Suspension de résine selon l'une quelconque des revendications précédentes, **caractérisée en ce que** des particules inorganiques, en particulier des particules de SiO₂, AI₂O₃, ZrO₂, TiO₂, peuvent être contenues.

11. Suspension de résine selon l'une quelconque des revendications précédentes, **caractérisée en ce que** la résine de formaldéhyde est une résine de mélamine.

12. Procédé de fabrication d'une composition à utiliser dans une suspension de résine selon l'une quelconque des revendications précédentes comprenant les étapes :
- de fourniture d'une suspension aqueuse contenant au moins un composé de formule générale (I), au moins un composé de formule générale (II) et au moins un composé de formule générale (III) ;
- d'ajout d'au moins un catalyseur, en particulier un acide, à la suspension constituée d'au moins un composé de formule (I), d'au moins un composé de formule (II) et d'au moins un composé de formule (III) ;
- d'ajout d'au moins un agent de matage ; et
- de séparation de la phase aqueuse du mélange constitué d'au moins un composé de formule (I), d'au moins un composé de formule (II), d'au moins un composé de formule (III) et de l'au moins un agent de matage.

13. Utilisation d'une suspension de résine selon l'une quelconque des revendications 1 à 11 pour le revêtement de matériaux de support, en particulier de couches de papier, telles que des couches de papier décoratif ou des couches de papier overlay, ou en particulier de panneaux en matériaux dérivés du bois, tels que des panneaux de fibres moyenne densité (MDF), de fibres haute densité (HDF) ou de lamelles orientées (OSB), des panneaux de contreplaqué ou des panneaux de composite bois-plastique (WPC) ou des panneaux de composite pierre-plastique (SPC).

14. Panneau de matériaux dérivés du bois revêtu d'au moins une suspension de résine selon l'une quelconque des revendications 1 à 11.

15. Couche de papier, de préférence couche de papier décoratif ou couche de papier overlay, revêtue d'au moins une suspension de résine selon l'une quelconque des revendications 1 à 11.
